# EUROPEAN PATENT SPECIFICATION

(11) **EP 1 250 259 B1**
(45) Date of publication and mention of the grant of the patent: **30.06.2004**
(21) Application number: 01901286.3
(22) Date of filing: 23.01.2001
(51) Int. Cl.: B64D 37/32, B01D 19/00

(54) **A FUEL INERTING SYSTEM**
KRAFTSTOFFINERTISIERUNGSSYSTEM
SYSTEME D'INERTAGE DE CARBURANT

(30) Priority: 26.01.2000 GB 0001649
(43) Date of publication of application: 23.10.2002
(73) Proprietor: BAE SYSTEMS plc, Farnborough, Hampshire GU14 6YU (GB)
(72) Inventor: PICOT, Christine, Bristol BS6 7SB (GB); WARD, Michael, David, Bristol BS8 3HG (GB)
(86) International application number: PCT/GB2001/000220
(87) International publication number: WO 2001/054979

(56) References cited:
- EP-A- 0 867 367
- WO-A-00/00389
- US-A- 3 691 730
- US-A- 3 693 915
- US-A- 3 710 549
- US-A- 3 788 039
- US-A- 4 378 920

## Description

### BACKGROUND OF THE INVENTION

### Field of the Invention

The present invention relates to a fuel inerting system that combines fuel inerting with fuel scrubbing.

It is vital to minimise the risk of fire in the fuel tanks of aeroplanes. This is particularly important in military aircraft where there is a fire risk during battle. The risk of a fire is substantially reduced by providing a flow of inert gas, usually Nitrogen Enriched Air (NEA), into the ullage above the fuel in each fuel tank. It is also important to carry out a process known as scrubbing in which dissolved oxygen in the fuel is displaced by mixing NEA with the oxygenated fuel.

One method of scrubbing fuel is to use the motive force of the fuel entering a tank during refuelling to power a centrifugal separator, or another type of fuel scrubber or mixer, using jet-pump action. This draws the NEA from the tank ullage in order to displace oxygen dissolved in the fuel. An alternative method of scrubbing is to introduce pressurised NEA directly into the tank.

Current systems, like that used, for example, on a Boeing C-17 aircraft, incorporate a nitrogen separator and a storage system for the inert gas, both of which are fixed within the aircraft structure. Pressurised air from the aircraft engines is then used as a supply to the nitrogen separator.

### Description of the Prior Art

US 3,693,915 recognises that neither flame nor explosion can propagate in a fuel tank, regardless of any ignition source, when the oxygen concentration in the fuel vapour is below the flammability limit. This has been achieved by employing an inert gas, such as nitrogen, to flush air (which contains 21% oxygen) out of the tank and then to pressurise the tank with nitrogen to prevent entrance of air when the ambient pressure increases relative to the internal tank pressure, as during decent of the aircraft. It also recognises that oxygen from the air dissolves in aircraft fuel, in proportion to the gas partial pressures at the air-fuel interface, and that such dissolved oxygen will come out of solution when the pressure on the fuel reduces. Thus oxygen is released into the ullage as the aircraft climbs. US 3,693,915 teaches that an inert gas should be deployed in the vapour space (that is the ullage) of a fuel tank to prevent air from entering the tank, and additionally that dissolved oxygen should be removed from the fuel during flight and especially during the climb phase as the tank pressure decreases, whereby to maintain the oxygen concentration in the ullage at a safe level of 10 percent or less so as not to propagate flame or explosion; that is inert. More particularly a fuel tank inerting system is envisaged in which the ullage can be supplied with nitrogen either through a fog nozzle, or from a nitrogen supply source. A fuel supply system circulates excess fuel through a mixing nozzle inside the tank, the mixing nozzle having a suction port connected by a solenoid operated control valve either to draw nitrogen from the nitrogen supply source in response to a differential pressure sensing device, or to circulate the ullage gas supply thereby preventing any fuel from entering the suction port when the nitrogen source is disconnected.

US 3,693,915 therefore teaches that a fuel inerting system should be provided with a fuel scrubber to replace oxygen dissolved in the fuel within a fuel tank with an inert gas, and a valve arrangement operable to supply gas to the fuel scrubber either through a first supply means from the ullage of the tank or through a second supply means from a pressurised inert gas supply. There is no teaching regarding controlling the concentration of oxygen in the ullage gas which of course receives oxygen scrubbed from the fuel.

### SUMMARY OF THE INVENTION

According to the invention a fuel inerting system of the kind having a fuel scrubber to replace oxygen dissolved in the fuel within a fuel tank with an inert gas, and a valve arrangement operable to supply gas to the fuel scrubber either through a first supply means from a pressurised inert gas supply or through a second supply means from the ullage of the tank, has the valve arrangement controlled by an oxygen sensor which is arranged to monitor the oxygen concentration of the gas in the ullage, and the valve arrangement is arranged either to select the first supply means to supply the pressurised inert gas to the fuel scrubber whenever the gas in the ullage is not inert, or to select the second supply means to supply gas from the ullage to the fuel scrubber whenever the gas in the ullage is inert whereby only one of the supply means is operable at any given time.

In this manner the present invention provides a fuel inertion system that maintains the ullage inert whilst scrubbing dissolved oxygen from the fuel.

The valve arrangement preferably includes a pressure-actuated priority valve operable by the pressure of the inert gas from the pressurised inert gas supply to shut off flow of gas through the second supply means from the ullage. A shut-off valve may be operable to a closed position to prevent operation of the pressure-actuated priority valve by the pressure of the inert gas from the pressurised inert gas supply. The oxygen sensor is preferably arranged to shut-off the first supply means.

The inert gas is preferably nitrogen enriched air NEA. The system preferably includes means for producing the nitrogen enriched air from within a pressurised portion of an aircraft, for instance a cargo bay. The means for producing the nitrogen enriched air may be a nitrogen separator located within, but removable from, the aircraft. The pressurised inert gas supply preferably includes storage means for the pressurised inert gas. The pressurised inert gas supply is preferably located within, but removeable from, an aircraft.

When the ullage is inert, for example during normal air-to-air refueling, scrubbing of the fuel as it enters the fuel tank is carried out using a fuel scrubber, for example a jet-pump mixer, drawing NEA from the ullage. However, when the ullage is not inert, for example during initial fuelling for a tactical military mission, scrubbing of the fuel is carried out using a pressurised NEA supply. The operation of the two systems is selected and controlled by the valve arrangement.

The present invention also provides a system that incorporates a nitrogen separator and an inert gas storage system which is carried in the aircraft cargo bay or other pressurised area of the aircraft, and which can be removed when the system is no longer required. The present system takes air from the aircraft pressurised cabin via the cargo bay, or other pressurised area, and compresses it using a separate compressor before supplying the air to the separator. As a result of this portable system, it is possible to operate a separator that is normally ground-based in flight at altitude.

It is favorable for the system also to comprise a nitrogen separator and an inert gas store which take their air supply in flight from the aircraft pressurised cabin, and are portable and can be removed from the aircraft when no longer required.

### BRIEF DESCRIPTION OF THE DRAWINGS

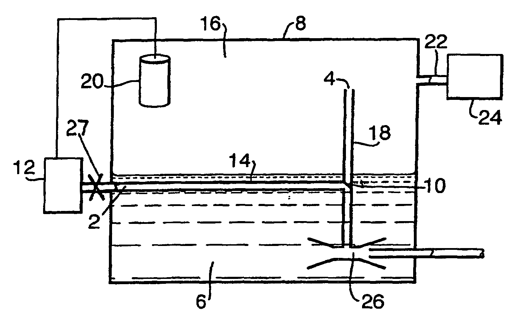

A fuel inerting system according to the present invention will now be described, by way of example only, with reference to the accompanying drawing, which is a schematic representation of the system.

### GENERAL DESCRIPTION OF THE INVENTION

During refueling on the ground, air is vented out from the ullage via an outlet in the fuel tank and a surge tank, and is replaced by fuel. Air remaining in the ullage is replaced by NEA. An on-board inert gas generating system then operates to maintain a layer of inert gas, such as Nitrogen Enriched Air (NEA) within the fuel tanks. The NEA is produced from the engine bleed air using a nitrogen separator (not shown).

### DETAILED DESCRIPTION OF THE INVENTION

Referring now to the drawing, the system comprises two separate supply means 2, 4, for supplying NEA to fuel 6 within a fuel tank 8. The first supply means 2 is connected to a pressurised supply 12 of NEA which flows along a first supply line 14 to the fuel 6 within the fuel tank 8, via a valve arrangement including a priority valve 10. The second supply means 4 provides a supply of NEA from the fuel tank ullage 16 along a second supply line 18 to the fuel 6 within the fuel tank 8, via the priority valve 10. Either supply means 2, 4 uses a fuel scrubber 26 in the form of a jet-pump mixer that uses the NEA to displace dissolved oxygen from the fuel and vent it overboard.

The priority valve 10 has two operating positions. The first operating position, which is shown in the drawing, opens the first supply line 14, allowing the flow of NEA from the pressurised supply 12 to the fuel 6, while, at the same time, closing the second supply line 18 so as to prevent NEA from the fuel tank ullage 16 flowing into the fuel. The second operating position closes the first supply line 14 preventing the flow of pressurised NEA into the fuel 6, while, at the same time, opening the second supply line 18, thus allowing flow of NEA from the fuel tank ullage 16 into the fuel 6.

One possible means for operating the priority valve 10 is now described. The system is arranged such that the pressure in the pressurised supply 12 is higher than the pressure in the ullage 16. When the pressure from the pressurised supply 12 is applied to the priority valve 10, by opening a shut-off valve 27 located in the first supply line 14, the priority valve 10 is moved by the presurised supply 12 to the position shown in the drawing. When the shut-off valve 27 is closed, the priority valve 10 reverts to its second operating position.

The quantity of inert gas which needs to be supplied to the fuel tank 8 depends on the oxygen concentration in the fuel tank's ullage 16. An oxygen sensor 20 is provided within the ullage 16 of the fuel tank 8 to measure the oxygen concentration and to assess whether the ullage gas is inert. The sensor 20 is linked to the first supply means 2 so as to shut off the supply line 14 when the oxygen concentration is reduced to a required level.

The NEA is stored under pressure in pressure vessels so as to reduce the volume of the amount of gas to be stored. The standard storage pressure of NEA is 200 bar, that is approximately 3000 psi (pounds per square inch). The pressure of the NEA is regulated and reduced to an intermediate level using a high pressure regulating shut-off valve (not shown).

An outlet 22 is provided within the fuel tank which allows the NEA to flow to and from a surge tank 24 (or vent box). During aircraft operation, NEA fills the ullage 16 in the fuel tank 8 and the surge tank 24. NEA flows out of the ullage 16 during the aircraft's ascent and into the ullage 16 during descent as a result of the changes in the outside ambient pressure.

The pressure formed within the surge tank 24 is regulated using a low pressure regulating shut-off valve (not shown), which keeps the pressure at a required level, regardless of the flow rate of the gas to the surge tank.

As fuel 6 from the fuel tank 8 is consumed, the pressure within the fuel tank drops and NEA is required to be supplied to the tank so as to stabilise the pressure variation. Pressure is otherwise maintained in the ullage 16 of the fuel tank 8 by means of an outward vent valve and an inward vent valve (both not shown). The outward vent valve acts as a relief valve to vent NEA from the fuel tank 8 thereby to limit the positive differential pressure between the fuel system and the outside ambient pressure during the aircraft's ascent. The inward vent valve limits the negative differential pressure during the aircraft's descent by allowing outside air to enter the ullage 16 during descent as a result of changes in outside ambient pressure.

It is beneficial to maintain a positive pressure difference between the fuel tank 8 and the ambient outside pressure during the aircraft's ascent as the difference between the pressure at sea level and cruise level will result in a reduction in the quantity of inert gas that needs to be supplied.

The nitrogen separator and the NEA pressurised vessels are stored in the aircraft cargo bay. They may then be disengaged from the overall fuel inerting system and can be removed from the aircraft system when they are not required. Furthermore, the air taken from the cargo bay, or other pressurised area, is compressed separately using a standard compressor before being supplied to the nitrogen separator in order to produce the NEA. As a result of taking air from the cargo bay, or other pressurised area, as opposed to outside the aircraft, it is possible to operate a standard separator that is normally ground-based, during flight at high altitude. This is not possible in systems having a fixed nitrogen separator and pressurised vessels which require pressurised air from the aircraft's engines as a supply to the nitrogen separator.

## Claims

1. A fuel inerting system having a fuel scrubber (26) to replace oxygen dissolved in the fuel (6) within a fuel tank (8) with an inert gas, and a valve arrangement (10) operable to supply gas to the fuel scrubber (26) either through a first supply means (2) from a pressurised inert gas supply (12) or through a second supply means (4) from the ullage (16) of the tank (8), **characterised in that** the valve arrangement (10) is controlled by an oxygen sensor (20) which is arranged to monitor the oxygen concentration of the gas in the ullage, and the valve arrangement (10) is arranged either to select the first supply means (2) to supply the pressurised inert gas (12) to the fuel scrubber (26) whenever the gas in the ullage, (16) is not inert, or to select the second supply means (4) to supply gas from the ullage (16) to the fuel scrubber (26) whenever the gas in the ullage (16) is inert whereby only one of the supply means (2 or 4) is operable at any given time.

2. A fuel inerting system, according to claim 1, in which the valve arrangement (10) includes a pressure-actuated priority valve (10) operable by the pressure of the inert gas from the pressurised inert gas supply (12) to shut off flow of gas through the first supply means (4) from the ullage (16).

3. A fuel inerting system, according to Claim 2, in which a shut-off valve (27) is operable to a closed position to prevent operation of the pressure-actuated priority valve (10) by the pressure of the inert gas from the pressurised inert gas supply (12).

4. A fuel inerting system, according to Claim 3, in which the oxygen sensor (20) is arranged to shut-off the first supply means (2).

5. A fuel inerting system, according to any preceding claim, in which the inert gas is nitrogen enriched air.

6. A fuel inerting system, according to Claim 5, including means for producing the nitrogen enriched air from air taken from within a pressurised portion of an aircraft.

7. A fuel inerting system, according to Claim 6, in which the pressurised portion of an aircraft is a cargo bay.

8. A fuel inerting system, according to Claim 6 or 7, in which the means for producing the nitrogen enriched air is a nitrogen separator located within, but removable from, the aircraft.

9. A fuel inerting system, according to any preceding claim, in which the pressurised inert gas supply (12) includes storage means for the pressurised inert gas.

10. A fuel inerting system, according to any preceding claim, in which the pressurised inert gas supply (12) is located within, but removable from, an aircraft.

## Patentansprüche

1. Kraftstoff-Inertisierungssystem mit einem Kraftstoffschrubber (26), um im Kraftstoff (6) innerhalb des Kraftstofftanks (8) gelösten Sauerstoff durch ein inertes Gas zu ersetzen und mit einer Ventilanordnung (10), die dem Kraftstoffschrubber (26) Gas entweder über eine erste Zuführungseinrichtung (2) von einer inerten Druckgasquelle (12) oder über eine zweite Zuführungseinrichtung (4) vom Leerraum (16) des Tanks (8) zuführt,
**dadurch gekennzeichnet, dass** die Ventilanordnung (10) durch einen Sauerstoffsensor (20) gesteuert wird, der derart angeordnet ist, dass er die Sauerstoffkonzentration des Gases im Leerraum überwacht und dass die Ventilanordnung (10) so angeordnet ist, dass sie entweder die erste Zuführungseinrichtung (2) auswählt, um unter Druck stehendes inertes Gas (12) dem Kraftstoffschrubber (26) immer dann zuzuführen, wenn das Gas im Leerraum (16) nicht inert ist oder die zweite Zuführungseinrichtung (4) auswählt, um Gas vom Leerraum (16) nach dem Kraftstoffschrubber (26) immer dann zuzuführen, wenn das Gas im Leerraum (16) inert ist, wobei jeweils nur eine der Zuführungseinrichtungen (2 oder 4) wirksam ist.

2. Kraftstoff-Inertisierungssystem nach Anspruch 1, bei welchem die Ventilanordnung (10) ein druckbetätigtes Prioritätsventil (10) aufweist, das durch den Druck des inerten Gases aus der inerten Druckgasquelle (12) betätigbar ist, um die Gasströmung durch die erste Zuführungseinrichtung (2) aus dem Leerraum (16) abzusperren.

3. Kraftstoff-inertisierungssystem nach Anspruch 2, bei welchem das Abschaltventil (27) in eine Schließstellung überführbar ist, um die Schaltung des druckbetätigten Prioritätsventils (10) durch den Druck des inerten Gases von der inerten Druckgasquelle (12) zu verhindern.

4. Kraftstoff-Inertisierungssystem nach Anspruch 3, bei welchem der Sauerstoffsensor (20) so ausgebildet ist, dass er die erste Zuführungseinrichtung (2) absperrt.

5. Kraftstoff-Inertisierungssystem nach einem der vorhergehenden Ansprüche, bei welchem das inerte Gas mit Stickstoff angereicherte Luft ist.

6. Kraftstoff-Inertisierungssystem nach Anspruch 5, welches Mittel aufweist, um die mit Stickstoff angereicherte Luft aus der Luft herzustellen, die aus einem Druckraum des Flugzeugs abgezogen wird.

7. Kraftstoff-Inertisierungssystem nach Anspruch 6, bei welchem der Druckraum des Flugzeugs ein Nutzlastraum ist.

8. Kraftstoff-Inertisierungssystem nach den Ansprüchen 6 oder 7, bei welchem das Mittel zur Erzeugung von mit Stickstoff angereicherter Luft ein Stickstoffseparator ist, der innerhalb des Flugzeugs angeordnet und aus diesem entfernbar ist.

9. Kraftstoff-Inertisierungssystem nach einem der vorhergehenden Ansprüche, bei welchem die inerte Druckgasquelle (12) einen Speicher für das inerte Druckgas aufweist.

10. Kraftstoff-Inertisierungssystem nach einem der vorhergehenden Ansprüche, bei welchem die inerte Druckgasquelle (12) innerhalb eines Flugzeugs, aber aus diesem entfernbar, angeordnet ist.

## Revendications

1. Un système d'inertage de carburant ayant un épurateur de carburant (26) pour remplacer de l'oxygène dissous dans le carburant (6) à l'intérieur d'un réservoir de carburant (8) par un gaz inerte, et un agencement à clapet (10) pouvant être activé pour alimenter l'épurateur de carburant (26) en gaz soit par le biais d'un premier moyen d'alimentation (2) à partir d'une alimentation en gaz inerte sous-pression (12), soit par le biais d'un deuxième moyen d'alimentation (4) à partir du volume mort (16) du réservoir (8), **caractérisé en ce que** l'agencement à clapet (10) est commandé par un capteur d'oxygène (20) qui est agencé pour contrôler la concentration en oxygène du gaz dans le volume mort, et l'agencement à clapet (10) est agencé soit pour sélectionner le premier moyen d'alimentation (2) afin d'alimenter l'épurateur de carburant (26) en gaz inerte sous pression (12) lorsque le gaz dans le volume mort (16) n'est pas inerte, soit pour sélectionner le deuxième moyen d'alimentation (4) afin d'alimenter l'épurateur de carburant (26) en gaz à partir du volume mort (16) lorsque le gaz dans le volume mort (16) est inerte, grâce à quoi seul l'un des moyens d'alimentation (2 et 4) peut être activé à tout moment donné.

2. Un système d'inertage de carburant, selon la revendication 1, dans lequel l'agencement à clapet (10) comprend un clapet préférentiel activé par pression (10) pouvant être activé par la pression du gaz inerte provenant de l'alimentation en gaz inerte sous pression (12) afin de couper l'écoulement de gaz par le biais du premier moyen d'alimentation (4) à partir du volume mort (16).

3. Un système d'inertage de carburant, selon la revendication 2, dans lequel une vanne d'isolement (27) peut être activée jusqu'à une position fermée afin d'empêcher l'activation du clapet préférentiel actionné par pression (10) par la pression du gaz inerte provenant de l'alimentation en gaz inerte sous pression (12).

4. Un système d'inertage de carburant, selon la revendication 3, dans lequel le capteur d'oxygène (20) est agencé pour isoler le premier moyen d'alimentation (2).

5. Un système d'inertage de carburant, selon n'importe quelle revendication précédente, dans lequel le gaz inerte est de l'air enrichi en azote.

6. Un système d'inertage de carburant, selon la revendication 5, comprenant un moyen pour produire l'air enrichi en azote à partir d'air pris de l'intérieur d'une portion pressurisée d'un aéronef.

7. Un système d'inertage de carburant, selon la revendication 6, dans lequel la portion pressurisée d'un aéronef est une soute.

8. Un système d'inertage de carburant, selon la revendication 6 ou la revendication 7, dans lequel le moyen pour produire l'air enrichi en azote est un séparateur d'azote situé à l'intérieur de l'aéronef mais pouvant être retiré de celui-ci.

9. Un système d'inertage de carburant, selon n'importe quelle revendication précédente, dans lequel l'alimentation en gaz inerte sous pression (12) comprend un moyen de stockage pour le gaz inerte sous pression.

10. Un système d'inertage de carburant, selon n'importe quelle revendication précédente, dans lequel l'alimentation en gaz inerte sous pression (12) est située à l'intérieur de l'aéronef mais peut être retirée de celui-ci.
